(19) Europäisches Patentamt
European Patent Office
Office européen des brevets

(11) Numéro de publication : **0 060 741 B1**

(12) # FASCICULE DE BREVET EUROPÉEN

(45) Date de publication du fascicule du brevet : **17.10.84**

(51) Int. Cl.³ : **C 01 B 17/50**, C 01 B 17/04, B 01 J 21/02, B 01 D 53/36

(21) Numéro de dépôt : **82400304.0**

(22) Date de dépôt : **22.02.82**

(54) **Catalyseur et procédé pour le traitement des gaz résiduaires industriels contenant des composés du soufre.**

(30) Priorité : **13.03.81 FR 8105029**

(43) Date de publication de la demande : **22.09.82 Bulletin 82/38**

(45) Mention de la délivrance du brevet : **17.10.84 Bulletin 84/42**

(84) Etats contractants désignés : **AT BE DE FR GB IT NL SE**

(56) Documents cités :
**FR-A- 2 242 145**
**GB-A- 769 996**
**US-A- 1 900 751**
**US-A- 2 595 943**
**US-A- 4 092 404**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Dupin, Thierry**
**7, rue Robert de Luzarches**
**F-95140 Garges-les-Gonesse (FR)**

(74) Mandataire : **Savina, Jacques et al**
**RHONE-POULENC RECHERCHES Service Brevets Chimie et Polymères 25, Quai Paul Doumer**
**F-92408 Courbevoie Cedex (FR)**

**EP 0 060 741 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un catalyseur et un procédé pour le traitement des gaz résiduaires industriels contenant des composés du soufre. Elle a trait plus particulièrement à un catalyseur à base d'oxyde de titane et contenant des sulfates d'alcalino-terreux et a son application à la catalyse Claus de récupération du soufre à partir de gaz résiduaires renfermant notamment de l'hydrogène sulfuré, de l'anhydride sulfureux et éventuellement des dérivés organiques du soufre tels que $CS_2$ et COS.

On connaît divers catalyseurs et procédés de traitement de transformation catalytique de composés organiques sulfurés présents dans les gaz résiduels industriels.

Ainsi, la demanderesse a décrit dans sa demande de brevet européen n° 38 741 des catalyseurs à base d'oxyde de titane qui permettent notamment d'obtenir d'excellents rendements de récupération du soufre à partir de gaz contenant de l'hydrogène sulfuré, de l'anhydride sulfureux et des dérivés organiques du soufre.

Poursuivant ses recherches, la demanderesse a découvert de nouveaux catalyseurs à base d'oxyde de titane qui présentent une solidité et une activité accrue ainsi qu'une résistance à la sulfatation, notamment à basse température, exceptionnelle.

La présente invention concerne en effet un catalyseur pour le traitement des gaz résiduaires industriels contenant des composés du soufre caractérisé en ce qu'il comporte de l'oxyde de titane et un sulfate d'un métal alcalino-terreux.

Au sens de la présente invention, on entend par « traitement des composés du soufre » toute transformation catalytique de composés du soufre provenant de gaz résiduels industriels en composés aisément éliminables.

La présente invention est particulièrement utilisable pour le traitement des gaz résiduaires industriels selon le procédé Claus de récupération du soufre à partir de gaz renfermant notamment de l'hydrogène sulfuré, de l'anhydride sulfureux et éventuellement des dérivés organiques du soufre tels que le sulfure de carbonyle, le sulfure de carbone et les mercaptans.

Le catalyseur selon l'invention comporte de l'oxyde de titane et un sulfate d'un métal alcalino-terreux choisi parmi le groupe constitué par le calcium, le barium, le strontium et le magnésium.

Selon un mode de mise en œuvre préféré, le catalyseur comporte de l'oxyde de titane et du sulfate de calcium. La résistance mécanique de ce catalyseur s'avère exceptionnelle.

La proportion en poids rapportée au poids du catalyseur en oxyde de titane dans le catalyseur varie de préférence entre environ 60 et environ 99 % et plus particulièrement entre 80 et 99 %.

La proportion en poids rapportée au poids de catalyseur en sulfate d'un métal alcalino-terreux varie de préférence entre environ 1 et environ 40 % et plus particulièrement entre 1 et 20 %.

Le catalyseur selon l'invention peut être préparé par tout procédé approprié permettant d'obtenir soit un produit massique contenant l'oxyde de titane et le sulfate du métal alcalino-terreux, soit un produit constitué de l'oxyde de titane imprégné superficiellement par le sulfate du métal alcalino-terreux.

Selon un premier mode de préparation du catalyseur selon l'invention, on opère par imprégnation d'un corps façonné à base d'oxyde de titane successivement avec un composé apportant l'anion sulfate puis avec un composé apportant le cation alcalino-terreux de façon à former le sulfate du métal alcalino-terreux à l'intérieur du corps façonné à base d'oxyde de titane.

Selon ce premier mode préféré de préparation, le corps façonné à base d'oxyde de titane utilisé peut notamment être obtenu selon le procédé décrit dans la demande européenne n° 38 741 au nom de la demanderesse. Ce procédé comporte les étapes suivantes :

1) on opère le malaxage d'un mélange comportant :

— de 1 à 40 % environ en poids d'eau,
— de 0 à 15 % environ en poids d'additif de mise en forme,
— de 45 à 99 % environ en poids d'une poudre d'oxyde de titane mal cristallisé et/ou amorphe présentant une perte au feu comprise entre environ 1 et 50 %,

2) on opère la mise en forme de ce mélange,

3) on sèche éventuellement, puis on calcine les produits obtenus.

Selon la première étape de ce procédé, on opère le malaxage d'un mélange comportant de 1 à 40 % environ en poids d'eau, de 0 à 15 % environ en poids d'additif de mise en forme et de 45 à 99 % environ en poids d'une poudre d'oxyde de titane mal cristallisé et/ou amorphe présentant une perte au feu comprise entre environ 1 et 50 %. Les pourcentages en poids indiqués sont rapportés au poids total du mélange.

De préférence, selon cette première étape, on opère le malaxage d'un mélange comportant de 5 à 35 % environ en poids d'eau ; de 0,1 à 10 % environ en poids d'additifs de mise en forme et de 55 à 94,9 % environ en poids d'une poudre d'oxyde de titane mal cristallisé et/ou amorphe.

Les additifs de mise en forme que l'on peut mettre en œuvre dans cette première étape sont ceux utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tall-oil, les gommes xanthane, des agents tensio-actifs, des agents floculants comme les polyacrilamides,

le noir de carbone, les amidons, l'acide stéarique, l'alcool polyacrylique, l'alcool polyvinylique, des biopolymères, le glucose, les polyéthylène glycol...

La poudre d'oxyde de titane mal cristallisé et/ou amorphe mise en œuvre présente une perte au feu comprise entre environ 1 et 50 % et de préférence entre 5 et 40 %. On entend par mal cristallisé un oxyde de titane ayant un spectre de rayons X présentant des halos à la place des raies principales de l'oxyde de titane bien cristallisé. On entend par amorphe un oxyde de titane dont le spectre de rayon X ne présente aucune raie de diffraction. La perte au feu (PAF) de la poudre est mesurée comme la perte en poids correspondant au rapport :

$$\text{PAF en } \% = P_0 - P_1/P_0$$

dans lequel

$P_0$ = Poids initial de la matière première,

$P_1$ = Poids de cette matière après calcination 2 heures à 1 000 °C et refroidissement à la température ambiante dans une enceinte anhydre.

La matière première mise en œuvre selon ce procédé est une suspension auqueuse constituée principalement d'oxyde de titane amorphe et/ou mal cristallisé. Selon une variante du procédé de l'invention, on peut également utiliser toute substance convertible en oxyde de titane à la calcination telle que par exemple les acides ortho et métatitaniques et les oxyhydroxydes de titane.

La suspension aqueuse constituée principalement d'oxyde de titane amorphe et/ou mal cristallisé peut notamment être obtenue à partir du procédé classique de l'attaque sulfurique de l'ilménite après l'étape d'hydrolyse et de filtration. Elle peut également provenir de l'hydrolyse des composés de titane de formule $TiCl_{4-n}(OR)_n$ dans laquelle « n » est compris entre 0 et 4 et R est un radical alkyl de préférence choisi parmi les suivants : méthyle, éthyle, isopropyle, butyle, hexyle et stéaryle. La suspension peut également provenir de la précipitation de sels de titane par une base telle que l'ammoniaque.

On obtient la poudre ayant la PAF désirée par séchage de ladite suspension par les techniques classiques d'atomisation, d'étuvage ou toute technique de séchage dans laquelle la poudre obtenue reste à une température inférieure à environ 200 °C.

Le temps de malaxage du mélange peut varier dans de larges limites, il est généralement compris entre quelques minutes et trois heures.

Selon une variante de ce procédé, on peut ajouter au mélange de préférence jusqu'à environ 30 % en poids d'un constituant choisi parmi la silice, l'alumine, les argiles, les silicates, le sulfate de titane, les fibres céramiques, etc...

Selon la seconde étape de ce procédé, on opère la mise en forme du mélange. La mise en forme peut conduire à des produits de forme sphérique, cylindrique, de pastilles, de boulettes, de granulés, de nid d'abeille, etc... de dimensions variées. Ils peuvent notamment être obtenus avec une machine à pastiller, un granulateur tournant, une machine de moulage par extrusion, une machine à former des boulettes ou une combinaison d'une machine de moulage par extrusion avec un granulateur tournant.

Selon la troisième étape de ce procédé, on sèche éventuellement, puis on calcine les produits obtenus. On calcine le produit séché ou non à une température comprise entre environ 200 et 900 °C. La température de calcination permet de régler la surface spécifique du produit obtenu entre environ 5 et 300 $m^2/g$. Une calcination à haute température conduit généralement à un produit présentant une faible surface et une calcination à faible température conduit généralement à un produit présentant une grande surface spécifique.

Par ailleurs, les corps façonnés à base d'oxyde de titane obtenus selon ce procédé, présentent un volume de pore total compris entre environ 0,05 et 0,5 $cm^3/g$, une résistance mécanique mesurée par la méthode d'écrasement grain par grain (EGG) très importante et une résistance à l'attrition exceptionnelle.

Le volume poreux de ces corps façonnés peut être très facilement réglé, notamment en ajustant la granulométrie de la poudre d'oxyde de titane, en choisissant la nature des additifs de mise en forme et la perte au feu du mélange mis en forme, en réglant la température de calcination. Par ailleurs, ainsi qu'il est bien connu de l'homme de l'art, on peut régler le volume poreux en ajoutant au mélange des agents porogènes tels que, par exemple, le charbon de bois, la cellulose cristalline, l'amidon, des polymères organiques, etc...

Selon le premier mode de préparation du catalyseur selon l'invention, on opère par imprégnation d'un corps façonné à base d'oxyde de titane sucessivement avec un composé apportant l'anion sulfate puis avec un composé apportant le cation alcalino-terreux de façon à former le sulfate du métal alcalino-terreux à l'intérieur du corps façonné à base d'oxyde de titane. Puis on sèche éventuellement et on calcine le produit obtenu à une température comprise entre environ 300 et environ 900 °C et de préférence entre 350 et 800 °C.

Le composé apportant l'anion sulfate est choisi parmi le groupe comportant l'acide sulfurique et les sulfates solubles en solution aqueuse et en particulier parmi le sulfate d'ammonium et le sulfate d'hydroxylamine.

L'imprégnation est réalisée de telle façon que le rapport en poids entre $SO_4$ et $TiO_2$ soit généralement compris entre environ 0,01 et environ 0,15 et de préférence entre 0,05 et 0,10.

Le composé apportant le cation alcalino-terreux est choisi dans le groupe des sels d'alcalino-terreux solubles en solution aqueuse et en particulier parmi les nitrates, chlorures, acétates des métaux alcalino-terreux.

L'imprégnation est réalisée de telle façon que le rapport en poids entre l'alcalino-terreux et l'oxyde de titane soit généralement compris entre environ 0,004 et environ 0,20 et de préférence entre 0,02 et 0,15.

Selon un second mode de préparation du catalyseur selon l'invention, on opère la mise en forme d'un mélange contenant d'une part l'oxyde de titane et d'autre part le sulfate du métal alcalino-terreux ou le mélange d'un composé apportant l'anion sulfate et d'un composé apportant le cation alcalino-terreux.

La mise en forme peut notamment être effectuée par le procédé comportant les étapes suivantes et dont les étapes sont analogues à celles qui ont été décrites précédemment pour la demande européenne n° 38741. Selon ce procédé :

1) On opère le malaxage d'un mélange comportant :

— de 1 à 40 % environ en poids d'eau,

— de 0 à 15 % environ en poids d'additif de mise en forme,

— de 45 à 99 % en poids d'une poudre présentant une PAF comprise entre 1 et 50 % et constituée d'oxyde de titane mal cristallisé et/ou amorphe et du sulfate du métal alcalino-terreux ou du mélange du composé apportant le sulfate et du composé apportant le cation alcalino-terreux ; le rapport en poids dans la poudre entre $SO_4$ et $TiO_2$ est compris entre environ 0,01 et environ 0,15 et de préférence entre 0,05 et 0,10 et le rapport en poids entre l'alcalino-terreux et l'oxyde de titane est compris entre environ 0,004 et environ 0,20 et de préférence entre 0,02 et 0,15.

2) On opère la mise en forme du mélange.

3) On sèche éventuellement, puis on calcine les produits obtenus à une température comprise entre environ 300 et environ 900 °C et de préférence entre 350 et 800 °C.

Les composés apportant l'anion sulfate ou le cation alcalino-terreux et leurs proportions par rapport au poids de $TiO_2$ sont ceux qui ont été décrits ci-dessus dans le premier mode de préparation du catalyseur selon l'invention.

Selon un troisième mode de préparation du catalyseur selon l'invention, on utilise comme matière première l'oxyde de titane issu de l'attaque sulfurique de l'ilménite après hydrolyse, filtration et séchage et contenant des anions sulfates sous forme, par exemple, d'acide sulfurique, de sulfate de titanyle, de sulfate de titane et/ou de sels basiques par exemple de formule générale :

$$Ti(OH)_x(HSO_4)_y \text{ avec } x + y = 4.$$

Selon une première variante de ce troisième mode de préparation du catalyseur de l'invention, on opère selon les étapes suivantes qui sont analogues à celles qui ont été décrites ci-dessus pour la demande européenne n° 38 741 :

a) On opère le malaxage d'un mélange comportant :

— de 1 à 40 % environ en poids d'eau,

— de 0 à 15 % environ en poids d'additif de mise en forme,

— de 45 à 99 % en poids d'une poudre constituée d'un composé apportant le cation alcalino-terreux et d'oxyde de titane provenant de l'attaque sulfurique de l'ilménite et contenant des anions sulfates, le rapport en poids dans la poudre entre $SO_4$ et $TiO_2$ étant compris entre environ 0,01 et environ 0,15 et de préférence entre 0,05 et 0,10, le rapport en poids dans la poudre entre l'alcalino-terreux et l'oxyde de titane étant compris entre environ 0,004 et 0,20 et de préférence entre 0,02 et 0,15 ; la perte au feu de cette poudre étant comprise entre environ 1 et environ 50 %.

b) On opère la mise en forme du mélange.

c) On sèche éventuellement, puis on calcine les produits obtenus à une température comprise entre environ 300 °C et environ 900 °C et de préférence entre 350 et 800 °C.

Selon une deuxième variante de ce troisième mode de préparation du catalyseur selon l'invention, on opère selon les étapes suivantes :

A) On opère le malaxage d'un mélange comportant :

— de 1 à 40 % environ en poids d'eau,

— de 0 à 15 % environ en poids d'additif de mise en forme,

— de 45 à 99 % en poids d'une poudre d'oxyde de titane provenant de l'attaque sulfurique de l'ilménite et contenant des anions sulfates, le rapport en poids dans la poudre entre $SO_4$ et $TiO_2$ étant compris entre environ 0,01 et environ 0,15 et de préférence entre 0,05 et 0,10 ; la PAF de cette poudre étant de préférence comprise entre environ 1 et environ 50 % ;

B) On opère la mise en forme du mélange, puis on sèche et on calcine éventuellement à une température comprise entre environ 300 °C et environ 900 °C et de préférence entre 350 °C et 800 °C.

C) On imprègne le produit façonné avec un composé soluble en solution aqueuse apportant le cation alcalino-terreux.

D) On sèche éventuellement, puis on calcine les produits obtenus à une température comprise entre environ 300 et environ 900 °C et de préférence entre 350 et 800 °C.

Selon un quatrième mode de préparation du catalyseur selon l'invention, on opère la sufatation d'un corps façonné à base d'oxyde de titane et contenant le cation alcalino-terreux. Cette sulfatation peut être réalisée à une température comprise entre 250 et 550 °C par un gaz contenant de préférence un mélange d'anhydride sulfureux et d'air, les rapports en poids $SO_4/TiO_2$ et métal alcalino-terreux/$TiO_2$ sont ceux qui ont été donnés ci-dessus.

Les produits ainsi préparés sont ensuite éventuellement séchés puis calcinés à une température comprise entre 300 et 900 °C et de préférence entre 350 et 800 °C.

La présente invention concerne également l'application des catalyseurs dans la catalyse Claus de récupération du soufre à partir de gaz renfermant notamment de l'hydrogène sulfuré et éventuellement de l'anhydride sulfureux et des dérivés organiques du soufre.

Dans le procédé Claus classique auquel n'est d'ailleurs pas limitée l'invention, la récupération du soufre à partir de gaz renfermant de l'hydrogène sulfuré et éventuellement des dérivés organiques du soufre, comporte deux étapes.

Dans une première étape, on brûle l'hydrogène sulfuré en présence d'une quantité d'air réglée pour transformer une partie du gaz en anhydride sulfureux puis, dans une deuxième étape, on fait passer le mélange gazeux obtenu dans un réacteur renfermant un catalyseur sur lequel a lieu la réaction

$$2\,H_2S + SO_2 \rightleftharpoons \frac{3}{n} S_n + H_2O. \qquad (1)$$

La demanderesse a découvert que les catalyseurs de l'invention permettent d'atteindre des rendements supérieurs à ceux obtenus avec les catalyseurs classiques pour des temps de contact plus courts.

Selon un premier mode d'utilisation spécifique des catalyseurs de l'invention on brûle à environ 1 000 °C un mélange gazeux comprenant de l'hydrogène sulfuré avec une quantité d'air réglée pour transformer en anhydride sulfureux une proportion de l'hydrogène sulfuré présent. Du soufre peut également être produit et l'on fait passer le gaz, après son passage dans une chaudière de récupération de chaleur, à travers un premier condenseur de soufre. On envoie alors le gaz à travers une série de réacteurs (en général 2 ou 3) renfermant le catalyseur obtenu selon le procédé de l'invention, réacteurs dans lesquels a lieu la réaction (1).

Les gaz qui se dégagent sont refroidis dans un condenseur de soufre et réchauffés à l'entrée de chaque réacteur.

Outre l'hydrogène sulfuré, les gaz Claus peuvent contenir des composés carbonés du soufre tels que COS et $CS_2$ qui sont généralement relativement stables au niveau des convertisseurs catalytiques et qui contribuent à accroître de 20 à 50 % les émissions de $SO_2$ et de composés sulfurés dans l'atmosphère après incinération des fumées. Ces composés très gênants sont, soit déjà contenus dans le gaz à traiter, soit formés au cours de la première étape à haute température.

Les catalyseurs de l'invention permettent d'éliminer par hydrolyse selon les réactions (2), (3) et/ou (4) ces dérivés carbonés du soufre extrêmement gênants :

$$CS_2 + 2\,H_2O \rightleftharpoons CO_2 + 2\,H_2S \qquad (2)$$

$$CS_2 + H_2O \rightleftharpoons COS + H_2S \qquad (3)$$

$$COS + H_2O \rightleftharpoons CO_2 + H_2S \qquad (4)$$

Selon un second mode de mise en œuvre spécifique de l'invention, on envoie dans une série de réacteurs (en général 2 ou 3) contenant le catalyseur de l'invention des gaz Claus contenant notamment de l'hydrogène sulfuré, du sulfure de carbone et/ou l'oxysulfure de carbone et de l'anhydride sulfureux nécessaire pour réaliser simultanément les réacteurs (1), (2), (3), (4).

Les catalyseurs de l'invention présentent une activité supérieure à celle obtenue avec les catalyseurs conventionnels pour la réaction (1). Ils permettent donc en réalisant cette réaction avec un meilleur rendement dans un temps plus court, de réduire la taille des réacteurs mis en œuvre.

De plus, ces catalyseurs ne sont pas sensibles à la présence d'oxygène dans les gaz jusqu'à des teneurs d'environ 2 %, ils ne sont donc pas désactivés par sulfatation comme les catalyseurs conventionnels. De ce fait, les catalyseurs selon l'invention présentent une durée de vie très supérieure à celle des catalyseurs connus.

En particulier à basse température la présence accidentelle d'oxygène dans les gaz traités ne désactive absolument pas le catalyseur qui retrouve complètement son activité initiale lorsqu'il n'y a plus d'oxygène dans les gaz.

Par ailleurs, en réalisant les réactions (2), (3) et/ou (4) avec des rendements proches de 100 %, les

catalyseurs selon l'invention permettent d'améliorer sensiblement le rendement global de récupération du soufre et de diminuer considérablement la nocivité des gaz rejetés à l'atmosphère. De plus, les catalyseurs de l'invention ne sont pas sensibles à la présence d'oxygène vis-à-vis des réactions (2), (3) et/ou (4).

Les catalyseurs de l'invention peuvent également s'appliquer au traitement de gaz renfermant de faibles proportions d'hydrogène sulfuré (en général inférieures à 5 %).

Les exemples ci-après illustrent l'invention sans en limiter la portée. Dans ces exemples, les méthodes de mesures appliquées sont les suivantes :

1. Les surfaces spécifiques (SBE) sont mesurées par la méthode classique d'absorption d'azote dite méthode BET.

2. Les volumes poreux (VPT) et les diamètres moyens de pores ($\varnothing_m$) sont déterminés par la méthode classique de pénétration au mercure. On distingue le volume microporeux Vmp qui correspond à des diamètres de pores inférieurs à 50 nm et le volume macroporeux VMP qui correspond à des diamètres de pores supérieurs à 50 nm ; pour chaque catégorie, on peut déterminer un diamètre moyen de pore.

3. La solidité mécanique est mesurée, d'une part, par la méthode d'écrasement grain à grain (EGG). Elle consiste à mesurer la force de compression maximale que peut supporter un granulé avant sa rupture, lorsque le produit est placé entre deux plans se déplaçant à la vitesse constante de 5 cm/mn. Dans le cas particulier de sphères, la force sera exprimée en Newton.

Dans le cas particulier des extrudés ou des pastilles, la compression est appliquée perpendiculairement à l'une des génératrices du produit, et l'écrasement grain à grain sera exprimé comme le rapport de la force à la longueur de la génératrice et sera donc en Newton/m.

4. La solidité mécanique est, d'autre part, mesurée par la résistance à l'attrition (R. A.). Cette méthode consiste à mesurer la quantité de poussière produite par 100 grammes de granulés placés sur un tamis n° 24 de 20 cm de diamètre de la série AFNOR XII-501 et vibrés pendant 10 minutes à l'aide d'un vibreur de la marque Fenwick Rex. La R. A. est le poids de poussière récupéré.

Exemple 1

Une suspension obtenue après hydrolyse du tétrachlorure de titane est lavée par décantation, filtrée, puis séchée en étuve à 110 °C pendant 24 heures. La poudre obtenue a une structure amorphe aux RX et sa PAF est de 18 %.

On opère le malaxage pendant 30 minutes du mélange constitué par cette poudre additionnée d'eau et de carboxyméthylcellulose dans les proportions suivantes :

66 % de cette poudre,
32 % d'eau,
2 % de carboxyméthylcellulose.

Ce mélange est ensuite extrudé au travers d'une filière de 3 mm, les extrudés sont séchés à 110 °C pendant 8 heures, puis calcinés à 450 °C pendant 2 heures. Les caractéristiques des produits extrudés obtenus sont les suivantes :

| | |
|---|---|
| SBE : | 135 $m^2 g^{-1}$ |
| VPT : | 0,32 $cm^3 g^{-1}$ |
| EGG : | 15,7 $10^3$ N/m |
| RA : | 1,9 %. |

Un kilogramme de produit est d'abord imprégné par 310 $cm^3$ d'une solution de sulfate d'ammonium, de manière à obtenir un rapport en poids $SO4/TiO_2 = 0{,}06$ séché à 100 °C pendant 4 heures.

On imprègne ensuite les produits séchés, par 300 $cm^3$ d'une solution de nitrate de calcium, de manière à obtenir un rapport en poids $Ca/TiO_2 = 0{,}025$.

Le produit est séché à 110 °C pendant 12 heures, puis calciné à 450 °C 1 heure, il a alors les caractéristiques suivantes :

| | |
|---|---|
| SBE : | 117 $m^2 g^{-1}$ |
| VPT : | 0,30 $cm^3 g^{-1}$ |
| EGG : | 26,5 $10^3$ N/m |
| RA : | 0,5 %. |

Il apparaît donc que les catalyseurs selon l'invention présentent une solidité mécanique (EGG et RA) très nettement améliorée.

Exemple 2

Les produits extrudés qui ont été décrits dans l'exemple 1 sont imprégnés par une solution d'acide

sulfurique de manière à obtenir un rapport en poids $SO_4/TiO_2 = 0,1$ ; après séchage à 100 °C pendant 4 heures on procède à une imprégnation par une solution d'acétate de strontium à une concentration telle que l'on obtienne un rapport en poids $SR/TiO_2 = 0,091$.

Après séchage à 110 °C pendant 4 heures, puis calcination à 450 °C pendant 2 heures, les catalyseurs obtenus ont les caractéristiques suivantes :

| | |
|---|---|
| SBE : | 105 $m^2\,g^{-1}$ |
| VPT : | 28 $cm^3\,g^{-1}$ |
| EGG : | 34,3 $10^3$ N/m |
| RA : | 0,8 %. |

Exemple 3

Une suspension obtenue après hydrolyse du tétrachlorure de titane est lavée par décantation, filtrée, puis séchée en étuve à 110 °C pendant 24 heures.

On opère le malaxage pendant 45 minutes du mélange constitué par cette poudre additionnée d'eau et de sulfate de calcium dans les proportions pondérales suivantes :

71 % de cette poudre,
8 % de sulfate de calcium,
21 % d'eau.

Le rapport en poids $Ca/TiO_2$ est alors de : 0,04 et le rapport en poids $SO4/TiO_2$ de : 0,10.

Ce mélange est ensuite extrudé au travers d'une filière de 5 mm, les extrudés sont séchés à 110 °C pendant 4 heures puis calcinés à 600 °C pendant 1 heure. Les caractéristiques du catalyseur obtenu sont les suivantes :

| | |
|---|---|
| SBE : | 58 $m^2\,g^{-1}$ |
| VPT : | 27 $cm^3$ g |
| EGC : | 18,6 $10^3$ N/m |
| RA : | 0,4 %. |

Exemple 4

Une suspension obtenue après hydrolyse du tétrachlorure de titane est lavée, puis filtrée. Le gâteau est ensuite dispersé dans une solution de sulfate d'ammonium, et la solution obtenu est séchée par atomisation, le rapport en poids $SO_4/TiO_2$ est alors de 0,1.

La poudre obtenue est malaxée pendant 30 minutes en présence d'eau et d'acétate de calcium dans les proportions suivantes :

66 % de la poudre,
8 % d'acétate de calcium,
26 % d'eau.

Le rapport en poids $Ca/TiO_2$ est alors de 0,041.

Le mélange est alors extrudé au travers d'une filière de 3 mm, les extrudés sont séchés à 110 °C pendant 4 heures, puis calcinés à 500 °C pendant 2 heures. Les caractéristiques du catalyseur obtenu sont les suivantes :

| | |
|---|---|
| SBE : | 96 $m^2\,g^{-1}$ |
| VPT : | 28 $cm^3\,g^{-1}$ |
| EGG : | 22,5 $10^3$ N/m |
| RA : | 0,95 % |

Exemple 5

A une suspension d'oxyde de titane obtenue après hydrolyse et filtration dans le procédé classique d'attaque sulfurique de l'ilménite, contenant les anions sulfates en quantité telle que le rapport en poids $SO4/TiO_2 = 0,08$, on incorpore du nitrate de calcium de manière à faire réagir tous les sulfates, le rapport en poids $Ca/TiO_2$ est alors de 0,033.

La suspension est séchée à 150 °C pendant 1 heure.

La poudre obtenue est malaxée pendant 2 heures en présence d'eau dans les proportions suivantes :

64 % de cette poudre,
36 % d'eau.

Le mélange est ensuite extrudé au travers d'une filière de 4 mm, le extrudés sont séchés à 110 °C pendant 4 heures, puis calcinés à 400 °C pendant 2 heures.

Les caractéristiques du catalyseur obtenu sont les suivantes :

| | |
|---|---|
| SBE : | 146 $m^2 g^{-1}$ |
| VPT : | 0,35 $cm^3 g^{-1}$ |
| EGG : | 23,5 $10^3$ N/m |
| RA : | 0,4 %. |

Exemple 6

Une suspension d'oxyde de titane obtenue après hydrolyse et filtration dans le procédé classique d'attaque sulfurique de l'ilménite est séchée à 180 °C pendant 1 heure, le rapport en poids $SO_4/TiO_2 = 0,08$.

On malaxe la poudre obtenue pendant 2 heures 30 minutes en présence d'eau et de nitrate de barium, dans les proportions suivantes :

64 % de cette poudre,
8 % de nitrate de barium,
28 % d'eau.

Le rapport en poids $Ba/TiO_2$ est alors de 0,113.

Le mélange est extrudé au travers d'une filière de 5 mm, les extrudés sont séchés à 110 °C pendant 4 heures, puis calcinés à 500 °C pendant 1 heure. Les caractéristiques du catalyseur obtenu sont les suivantes :

| | |
|---|---|
| SBE : | 107 $m^2 g^{-1}$ |
| VPT : | 0,32 $cm^3 g^{-1}$ |
| EGG : | 28,4 $10^3$ N/m |
| RA : | 0,2 %. |

Exemple 7

Une suspension d'oxyde de titane obtenue après hydrolyse et filtration dans le procédé classique d'attaque sulfurique de l'ilménite est séchée par passage dans un échangeur de chaleur dans lequel la suspension, puis la poudre sont déplacées au moyen d'une vis sans fin, laquelle est chauffée par un fluide caloporteur. Le rapport en poids $SO_4/TiO_2$ est égal à 0,085.

On prépare par malaxage pendant 20 minutes un mélange contenant :

69 % de cette poudre,
30,8 % d'eau,
0,2 % de polyacrilamide.

Ce mélange est introduit dans une extrudeuse et filé au travers d'une filière de diamètre 5 mm. Les extrudés obtenus sont séchés à 110 °C pendant 24 heures puis calcinés à 350 °C pendant 2 heures au four électrique sous air.

Les caractéristiques du produit fini sont les suivantes :

| | |
|---|---|
| SBE : | 217 $m^2 g^{-1}$ |
| VPT : | 0,29 $cm^3 g^{-1}$ |
| $\varnothing_m$ : | 7 nm |
| EGG : | 17,6 $10^3$ N/m |
| RA : | 1,2 %. |

On imprègne 1 000 g de ces extrudés par 230 $cm^3$ d'une solution de nitrate de calcium, de manière à obtenir un rapport en poids $CA/TiO_2 = 0,035$.

Le produit est séché à 110 °C pendant 4 heures puis calciné à 400 °C pendant 2 heures. Les caractéristiques du catalyseur obtenu sont les suivantes :

| | |
|---|---|
| SBE : | 158 $m^2 g^{-1}$ |
| BPT : | 0,28 $cm^3 g^{-1}$ |
| EGG : | 28,5 $10^3$ N/m |
| RA : | 0,3 %. |

Exemple 8

On utilise les mêmes extrudés que ceux décrits à l'exemple 1. 1 000 g de ces extrudés sont imprégnés par 310 $cm^3$ d'une solution de nitrate de calcium de manière à obtenir un rapport en poids $Ca/TiO_2 = 0,02$.

Le produit est séché à 110 °C pendant 2 heures.

On opère la calcination du produit à 450 °C pendant 7 heures, sous courant gazeux de composition volumique suivante :

10 % $SO_2$
90 % air.

Le catalyseur obtenu a les caractéristiques suivantes :

| | |
|---|---|
| SBE : | 95 $m^2$ $g^{-1}$ |
| VPT : | 0,31 $cm^3$ $g^{-1}$ |
| EGG : | 22,5 $10^3$ N/m |
| RA : | 0,8 %. |

Exemple 9

Le présent exemple illustre l'application des catalyseurs de l'invention obtenus selon les exemples 1 et 5 à la réaction

$$2\ H_2S + SO_2 \rightarrow (3/n)\ S_n + H_2O \quad (1)$$

On envoie dans une série de trois réacteurs isothermes un gaz dans les conditions suivantes :

a) entrée premier réacteur composition volumique du gaz :

| | |
|---|---|
| $H_2S$ : | 9 % |
| $SO_2$ : | 4,5 % |
| $H_2O$ : | 20 % |
| $N_2$ : | 66,5 %. |

La température du réacteur est de 300 °C.

Catalyseur : celui obtenu selon l'exemple 5 ;

b) entrée deuxième réacteur composition volumique du gaz :

| | |
|---|---|
| $H_2S$ : | 2,5 % |
| $SO_2$ : | 1,25 % |
| $H_2O$ : | 27 % |
| $N_2$ : | 69,25 %. |

La température du réacteur est de 250 °C.

Catalyseur : celui obtenu selon l'exemple 5 ;

c) entrée troisième réacteur composition volumique du gaz :

| | |
|---|---|
| $H_2S$ : | 1 % |
| $SO_2$ : | 0,5 % |
| $H_2O$ : | 30 % |
| $N_2$ : | 68,5 %. |

La température du réacteur est de 220 °C.

Catalyseur : celui obtenu selon l'exemple 1.

Les rendements en soufre indiqués dans le tableau ci-après ont été obtenus par dosage par analyse chromatographique des gaz entrée et sortie de chaque réacteur. Il est à noter que pour le premier réacteur, le rendement thermodynamique est de 86,2 %, pour le second réacteur de 79,5 % et pour le troisième réacteur de 72,5 %.

A titre comparatif, le tableau 1 ci-dessous indique également les résultats obtenus avec des catalyseurs conventionnels d'alumine.

(Voir Tableau I, page suivante)

Tableau I

| | Temps de contact en secondes | 0,25 | 0,5 | 1 | 2 | 3 |
|---|---|---|---|---|---|---|
| PREMIER REACTEUR | Catalyseur de l'invention Exemple 5 | 83 | 85 | 86 | 86 | 86 |
| | Alumine | 68 | 75 | 82 | 83 | 83 |
| SECOND REACTEUR | Catalyseur de l'invention Exemple 5 | 59 | 69 | 72 | 78 | 79 |
| | Alumine | 25 | 48 | 59 | 70 | 71 |
| TROISIEME REACTEUR | Catalyseur de l'invention Exemple 1 | 47 | 54 | 64 | 66 | 68 |
| | Alumine | 17 | 43 | 55 | 56 | 57 |

Il apparaît bien selon ce tableau que les catalyseurs selon l'invention permettent d'obtenir des rendements en soufre nettement supérieurs à ceux obtenus avec un catalyseur conventionnel pour des mêmes temps de contact.

De plus, l'introduction de 5 000 ppm (parts par million) d'oxygène ne modifie absolument pas les rendements obtenus dans le cas des catalyseurs de l'invention, alors que ceux-ci diminuent d'environ 25 % dans le cas des catalyseurs conventionnels.

Exemple 10

Le présent exemple illustre l'application des catalyseurs de l'invention obtenus selon l'exemple 6 aux réactions

$$2\ H_2S + SO_2 \rightarrow (3/n)\ S_n + H_2O \quad (1)$$

$$CS_2 + 2\ H_2O \rightarrow CO_2 + 2\ H_2S \quad (2)$$

On envoie dans un réacteur un gaz de composition volumique suivante :

| | |
|---|---|
| $H_2S$ : | 6 % |
| $SO_2$ : | 4 % |
| $CS_2$ : | 1 % |
| $H_2O$ : | 28 % |
| $N_2$ : | 61 % |

On impose au réacteur un profil de température proche de celui obtenu en réacteur industriel (adiabatique) dans les conditions suivantes :

(Voir Tableau II, page suivante)

Tableau 2

| Temps de contact en secondes | 1 | 2 | 3 | 4 |
|---|---|---|---|---|
| Température en 0°C | 260 | 330 | 340 | 340 |

La température d'entrée des gaz dans le réacteur et de 225 °C.

Les rendements d'hydrolyse (2) obtenus sont consignés dans le tableau 3 ci-après :

Tableau 3

| Temps de contact en secondes | 1 | 2 | 3 | 4 |
|---|---|---|---|---|
| Catalyseur de l'invention | 72 | 96 | 99 | 100 |
| Alumine | 3 | 14 | 32 | 53 |

Il apparaît que les catalyseurs de l'invention permettent d'obtenir des rendements d'hydrolyse du $CS_2$ nettement supérieurs à ceux obtenus avec un catalyseur conventionnel pour les mêmes temps de contact.

Les rendements en soufre (1) obtenus sont consignés dans le tableau 4 ci-après. Il est à noter que le rendement thermodynamique correspondant aux conditions de réaction est de 66,5 %.

Tableau 4

| Temps de contact en secondes | 1 | 2 | 3 | 4 |
|---|---|---|---|---|
| Catalyseur de l'invention | 66 | 66 | 66 | 66 |
| Alumine | 55 | 60 | 63 | 64 |

L'introduction de 2 % d'oxygène ne modifie absolument pas les rendements obtenus dans le cas des catalyseurs de l'invention, alors que ceux-ci diminuent de moitié dans le cas de catalyseurs conventionnels.

Exemple 11

Le présent exemple illustre l'application des catalyseurs de l'invention obtenus selon l'exemple 6 aux réactions :

$$2\ H_2S + SO_2 \rightarrow (3/n)\ S_n + H_2O \qquad (1)$$

$$COS + H_2O \rightarrow CO_2 + H_2S \qquad (4)$$

On envoie dans un réacteur dans les mêmes conditions que celles décrites à l'exemple 10 un gaz de composition :

| | |
|---|---|
| $H_2S$ : | 7,7 % |
| $SO_2$ : | 4,4 % |
| COS : | 0,3 % |
| $H_2O$ : | 28 % |
| $N_2$ : | 60 %. |

Les rendements d'hydrolyse (4) obtenus sont consignés dans le tableau 5 ci-après :

Tableau 5

| Temps de contact en secondes | 1 | 2 | 3 | 4 |
|---|---|---|---|---|
| Catalyseur de l'invention | 85 | 98 | 100 | 100 |
| Alumine | 4 | 17 | 39 | 60 |

Il apparaît que les catalyseurs de l'invention permettent d'obtenir des rendements d'hydrolyse du COS nettement supérieurs à ceux obtenus avec un catalyseur conventionnel pour les mêmes temps de contact.

Exemple 12

Le présent exemple illustre l'application des catalyseurs de l'invention obtenus suivant l'exemple 1 à la réaction :

$$2\ H_2S + SO_2 \rightarrow (3/n)\ S_n + H_2O$$

à basse température après simulation d'une entrée d'oxygène dans les gaz traités de 2 %.

La composition des gaz entrant dans le réacteur est la suivante :

| | |
|---|---|
| $H_2S$ : | 1 % |
| $SO_2$ : | 0,5 % |
| $H_2O$ : | 30 % |
| $N_2$ : | 68,5 %. |

La température du réacteur est de 220 °C.

Le catalyseur de l'exemple 1 est mis en œuvre pour traiter les gaz ci-dessus pendant 24 heures.

Les rendements en soufre obtenus sont les suivants, en fonction du temps de contact :

Tableau 6

| Temps de contact en secondes | 0,25 | 0,5 | 1 | 2 | 3 |
|---|---|---|---|---|---|
| Rendement en soufre | 47 | 54 | 64 | 66 | 68 |

On remplace dans le gaz traité 2 % de l'azote par de l'oxygène, la composition du gaz traité est alors :

| | |
|---|---|
| $H_2S$ : | 1 % |
| $SO_2$ : | 0,5 % |
| $H_2O$ : | 30 % |
| $N_2$ : | 66,5 % |
| $O_2$ : | 2 %. |

Après 24 heures, on supprime l'oxygène pour revenir à la composition initiale des gaz, les rendements en soufre sont alors les suivants, après 2 heures de fonctionnement sans oxygène :

Tableau 7

| Temps de contact en secondes | 0,25 | 0,5 | 1 | 2 | 3 |
|---|---|---|---|---|---|
| Rendement en soufre % | 45 | 55 | 63 | 67 | 68 |

Il apparaît donc d'après ces résultats que l'activité du catalyseur selon l'invention n'est absolument pas modifiée par suite d'une entrée accidentelle très importante d'oxygène dans les gaz traités. Cet avantage des catalyseurs selon l'invention se révèle d'une importance pratique considérable pour le traitement des gaz résiduaires industriels contenant des composés du soufre.

**Revendications**

1. Catalyseur pour le traitement des gaz résiduaires industriels contenant des composés du soufre caractérisé en ce qu'il comporte de l'oxyde de titane et un sulfate d'un métal alcalino-terreux choisi parmi le groupe constitué par le calcium, le barium, le strontium et le magnésium.

2. Catalyseur selon la revendication 1 caractérisé en ce que la proportion en poids rapportée au poids du catalyseur en oxyde de titane dans le catalyseur varie entre 60 et 99 % et plus particulièrement entre 80 et 99 %.

3. Catalyseur selon la revendication 1 caractérisé en ce que la proportion en poids rapportée au poids du catalyseur en sulfate du métal alcalino-terreux varie entre 1 et 40 % et plus particulièrement entre 1 et 20 %.

4. Procédé de préparation du catalyseur selon l'une quelconque des revendications 1 à 3 caractérisé en ce que l'on opère par imprégnation d'un corps façonné à base d'oxyde de titane successivement avec un composé apportant l'anion sulfate puis avec un composé apportant le cation alcalino-terreux de façon à former le sulfate du métal alcalino-terreux à l'intérieur du corps façonné à base d'oxyde de titane, puis on sèche éventuellement et on calcine le produit obtenu à une température comprise entre 300 et 900 °C et de préférence entre 350 et 800 °C ; le composé apportant l'anion sulfate est choisi parmi le groupe comportant l'acide sulfurique et les sulfates solubles en solution aqueuse et en particulier parmi le sulfate d'ammonium et le sulfate d'hydroxylamine ; l'imprégnation est réalisée de telle façon que le rapport en poids entre $SO_4$ et $TiO_2$ soit généralement compris entre 0,01 et 0,15 et de préférence entre 0,05 et 0,10 ; le composé apportant le cation alcalino-terreux est choisi dans le groupe des sels d'alcalino-terreux solubles en solution aqueuse et en particulier parmi les nitrates, chlorures, acétates des métaux alcalino-terreux ; l'imprégnation est réalisée de telle façon que le rapport en poids entre l'alcalino-terreux et l'oxyde de titane soit généralement compris entre 0,004 et 0,20 et de préférence entre 0,02 et 0,15.

5. Procédé de préparation du catalyseur selon l'une quelconque des revendications 1 à 3 caractérisé en ce que l'on opère la mise en forme d'un mélange contenant, d'une part, de l'oxyde de titane et, d'autre part, le sulfate du métal alcalino-terreux ou le mélange d'un composé apportant l'anion sulfate et d'un composé apportant le cation alcalino-terreux ; on opère selon les étapes suivantes :

a) On opère de malaxage d'un mélange comportant :

— de 1 à 40 % en poids d'eau,
— de 0 à 15 % en poids d'additif de mise en forme,
— de 45 à 99 % en poids d'une poudre présentant une PAF comprise entre 1 et 50 % et constituée d'oxyde de titane mal cristallisé et/ou amorphe et du sulfate du métal alcalino-terreux ou du mélange du composé apportant le sulfate qui est choisi parmi le groupe comportant l'acide sulfurique et les sulfates solubles en solution aqueuse et du composé apportant le cation alcalino-terreux qui est choisi parmi le groupe des sels d'alcalino-terreux solubles en solution aqueuse ; le rapport en poids dans la poudre entre $SO_4$ et $TiO_2$ est compris entre 0,01 et 0,15 et de préférence entre 0,05 et 0,10 et le rapport en poids entre l'alcalino-terreux et l'oxyde de titane est compris entre 0,004 et 0,20 et de préférence entre 0,02 et 0,15 ;

b) On opère la mise en forme du mélange ;

c) On sèche éventuellement, puis on calcine les produits obtenus à une température comprise entre 300 et 900 °C et de préférence entre 350 et 800 °C.

6. Procédé de préparation du catalyseur selon l'une quelconque des revendications 1 à 3 précédentes caractérisé en ce que

a) On opère le malaxage d'un mélange comportant

— de 1 à 40 % en poids d'eau,
— de 0 à 15 % en poids d'additif de mise en forme,
— de 45 à 99 % en poids d'une poudre constituée d'un composé apportant le cation alcalino-terreux

et d'oxyde de titane provenant de l'attaque sulfurique de l'ilménite et contenant des anions sulfates, le rapport en poids dans la poudre entre $SO_4$ et $TiO_2$ étant compris entre 0,01 et 0,15 et de préférence entre 0,05 et 0,10, le rapport en poids dans la poudre entre l'alcalino-terreux et l'oxyde de titane étant compris entre 0,004 et 0,20 et de préférence entre 0,02 et 0,15 ; la perte au feu de cette poudre étant comprise entre 1 et 50 %.

b) On opère la mise en forme du mélange.

c) On sèche éventuellement, puis on calcine les produits obtenus à une température comprise entre 300 °C et 900 °C et de préférence entre 350 et 800 °C.

7. Procédé de préparation du catalyseur selon l'une quelconque des revendications 1 à 3 caractérisé en ce que :

A) On opère le malaxage d'un mélange comportant

— de 1 à 40 % en poids d'eau,

— de 0 à 15 % en poids d'additif de mise en forme,

— de 45 à 99 % en poids d'une poudre d'oxyde de titane provenant de l'attaque sulfurique de l'ilménite et contenant des anions sulfates, le rapport en poids dans la poudre entre $SO_4$ et $TiO_2$ étant compris entre 0,01 et 0,15 et de préférence entre 0,05 et 0,10 ; la PAF de cette poudre étant de préférence comprise entre 1 et 50 % ;

B) On opère la mise en forme du mélange, puis on sèche et on calcine éventuellement à une température comprise entre 300 °C et 900 °C et de préférence entre 350 °C et 800 °C ;

C) On imprègne le produit façonné avec un composé soluble en solution aqueuse apportant le cation alcalino-terreux.

D) On sèche éventuellement, puis on calcine les produits obtenus à une température comprise entre 300 et 900 °C et de préférence entre 350 et 800 °C.

8. Procédé de préparation du catalyseur selon l'une quelconque des revendications 1 à 3 caractérisé en ce que l'on opère la sulfatation d'un corps façonné à base d'oxyde de titane et contenant le cation alcalino-terreux ; cette sulfatation est réalisée à une température comprise entre 250 et 550 °C par un gaz contenant de préférence un mélange d'anhydride sulfureux et d'air, les rapports en poids $SO_4/TiO_2$ étant compris entre 0,01 et 0,15 et alcalino-terreux/$TiO_2$ entre 0,004 et 0,20 ; les produits sont ensuite éventuellement séchés puis calcinés à une température comprise entre 300 et 900 °C et de préférence entre 350 et 800 °C.

9. Procédé de traitement des gaz résiduels industriels contenant des composés du soufre et en particulier selon le procédé Claus de récupération du soufre à partir de gaz renfermant notamment de l'hydrogène sulfuré, de l'anhydride sulfureux et éventuellement des dérivés organiques du soufre caractérisé en ce que l'on met en œuvre le catalyseur selon l'une quelconque des revendications 1, 2, 3.

**Claims**

1. Catalyst for the treatment of industrial residual gases containing sulphur compounds, characterised in that it contains titanium oxide and a sulphate of an alkaline earth metal chosen from among the group consisting of calcium, barium, strontium and magnesium.

2. Catalyst according to Claim 1, characterised in that the proportion of titanium oxide in the catalyst, by weight relative to the weight of the catalyst, varies between 60 and 99 % and more especially between 80 and 99 %.

3. Catalyst according to Claim 1, characterised in that the proportion of alkaline earth metal sulphate, by weight relative to the weight of the catalyst, varies between 1 and 40 % and more especially between 1 and 20 %.

4. Process for the preparation of the catalyst according to any one of Claims 1 to 3, characterised in that a shaped body based on titanium oxide is impregnated successively with a compound providing the sulphate anion and then with a compound providing the alkaline earth metal cation so as to form the alkaline earth metal sulphate within the shaped body based on titanium oxide, and thereafter the product obtained is dried if appropriate and is calcined at a temperature of between 300 and 900 °C and preferably between 350 and 800 °C, that the compound providing the sulphate anion is chosen from among the group comprising sulphuric acid and the sulphates which are soluble in aqueuous solution and in particular from among ammonium sulphate and hydroxylamine sulphate, that the impregnation is carried out in such a manner that the weight ratio of $SO_4$ to $TiO_2$ is generally between 0.01 and 0.15 and preferably between 0.05 and 0.10, that the compound providing the alkaline earth metal cation is chosen from the group of alkaline earth metal salts which are soluble in aqueous solution and in particular from among the alkaline earth metal nitrates, chlorides and acetates, and that the impregnation is carried out in such a manner that the weight ratio of the alkaline earth metal to the titanium oxide is generally between 0.004 and 0.20 and preferably between 0.02 and 0.15.

5. Process for the preparation of the catalyst according to one of Claims 1 to 3, characterised in that a

mixture containing first the titanium oxide and secondly the alkaline earth metal sulphate or the mixture of a compound providing the sulphate anion and a compound providing the alkaline earth metal cation is moulded, the following stages being carried out :

a) a mixture comprising from 1 to 40 % by weight of water, from 0 to 15 % by weight of moulding additive and from 45 to 99 % by weight of a powder having a loss on ignition of between 1 and 50 % and consisting of poorly crystallised and/or amorphous titanium oxide and of the alkaline earth metal sulphate or the mixture of the compound which provides the sulphate and which is chosen from among the group comprising sulphuric acid and the sulphates which are soluble in aqueous solution, and the compound providing the alkaline earth metal cation, which is chosen from among the group of alkaline earth metal salts which are soluble in aqueous solution, the weight ratio of $SO_4$ to $TiO_2$ in the powder being between 0.01 and 0.15 and preferably between 0.05 and 0.10 and the weight ratio between alkaline earth metal and titanium oxide being between 0.004 and 0.20 and preferably between 0.02 and 0.15, is compounded,

b) the mixture is moulded and

c) the products obtained are dried if appropriate and then calcined at a temperature of between 300 and 900 °C and preferably between 350 and 800 °C.

6. Process for the preparation of the catalyst according to any one of the preceding Claims 1 to 3, characterised in that

a) a mixture comprising from 1 to 40 % by weight of water, from 0 to 15 % weight of moulding additive and from 45 to 99 % of a powder consisting of a compound providing the alkaline earth metal cation and titanium oxide resulting from sulphuric acid digestion of ilmenite and containing sulphate anions, the weight ratio of $SO_4$ to $TiO_2$ in the powder being between 0.01 and 0.15 and preferably between 0.05 and 0.10, the weight ratio of alkaline earth metal to titanium oxide in the powder being between 0.004 and 0.20 and preferably between 0.02 and 0.15 and the loss on ignition of this powder being between 1 and 50 %, is compounded.

b) the mixture is moulded and

c) the products obtained are dried if appropriate and then calcined at a temperature of between 300 and 900 °C and preferably between 350 and 800 °C.

7. Process for the preparation of the catalyst according to any one of Claims 1 to 3, characterised in that :

A) a mixture comprising from 1 to 40 % by weight of water, and 0 to 15 % by weight of moulding additive and from 45 to 99 % by weight of a titanium oxide powder resulting from sulphuric acid digestion of ilmenite and containing sulphate anions, the weight ratio of $SO_4$ to $TiO_2$ in the powder being between 0.01 and 0.15 and preferably between 0.05 and 0.10, and the loss on ignition of this powder being preferably between 1 and 50 %, is compounded,

B) the mixture is moulded and is then dried and calcined if appropriate, at a temperature of between 300 °C and 900 °C and preferably between 350 °C and 800 °C,

C) the moulded product is impregnated with a compound which is soluble in aqueous solution and provides the alkaline earth metal cation and

D) the products obtained are dried if appropriate and then calcined at a temperature of between 300 and 900 °C and preferably between 350 and 800 °C.

8. Process for the preparation of the catalyst according to any one of Claims 1 to 3, characterised in that a moulded body based on titanium oxide and containing the alkaline earth metal cation is sulphated, this sulphation being carried out at a temperature of between 250 and 550 °C by means of a gas which preferably contains a mixture of sulphur dioxide and air, the weight ratio $SO_4/TiO_2$ being between 0.01 and 0.15 and the weight ratio of alkaline earth metal/$TiO_2$ being between 0.04 and 0.20, and that the products are thereafter dried if appropriate and then calcined at a temperature of between 300 and 900 °C and preferably between 350 and 800 °C.

9. Process for the treatment of industrial residual gases containing sulphur compounds, especially according to the Claus process for recovering sulphur from gases which in particular contain hydrogen sulphide, sulphur dioxide and, possibly organic sulphur derivatives, characterised in that the catalyst according to any one of Claims 1, 2 and 3 is used.

**Ansprüche**

1. Katalysator für die Behandlung von Schwefelverbindungen enthaltenden industriellen Abgasen, dadurch gekennzeichnet, daß er Titanoxid und ein Sulfat eines Erdalkalimetalls enthält, das aus der Gruppe von Calcium, Barium, Strontium und Magnesium ausgewählt ist.

2. Katalysator nach Anspruch 1, dadurch gekennzeichnet, daß der Gewichtsanteil des Titanoxids, bezogen auf das Gewicht des Katalysators, 60 bis 99 % und vorzugsweise 80 bis 99 % beträgt.

3. Katalysator nach Anspruch 1, dadurch gekennzeichnet, daß der Gewichtsanteil des Erdalkalisulfats, bezogen auf das Gewicht des Katalysators, 1 bis 40 % und vorzugsweise 1 bis 20 % beträgt.

4. Verfahren zur Herstellung des Katalysators nach irgendeinem der Ansprüche 1 bis 3, dadurch gekennzeichnet, daß man einen Formkörper auf der Basis von Titanoxid nacheinander mit einer das Sulfatanion und einer das Erdalkalikation liefernden Verbindung tränkt, um das Erdalkalisulfat im Inneren

des Formkörpers auf der Basis von Titanoxid zu bilden, gegebenefalls trocknet und das erhaltene Produkt bei einer Temperatur zwischen 300 und 900 °C, vorzugsweise zwischen 350 und 800 °C calciniert, wobei die das Sulfatanion liefernde Verbindung aus der Gruppe von Schwefelsäure und den in wässriger Lösung löslichen Sulfaten, insbesondere Amoniumsulfat und Hydroxylaminsulfat gewählt ist, die Imprägnierung in der Weise durchgeführt wird, daß das Gewichtsverhältnis von $SO_4$ zu $TiO_2$ im allgemeinen 0,01 und 0,15 bis vorzugsweise 0,05 bis 0,10 beträgt, die das Erdalkalikation liefernde Verbindung aus der Gruppe der in wässriger Lösung löslichen Erdalkalisalze und insbesondere unter den Nitraten, Chloriden und Acetaten der Erdalkalimetalle gewählt ist und die Imprägnierung in der Weise durchgeführt wird, daß das Gewichtsverhältnis des Erdalkalis zum Titanoxid im allgemeinen 0,004 bis 0,20 und vorzugsweise 0,02 bis 0,15 beträgt.

5. Verfahren zur Herstellung des Katalysators nach irgendeinem der Ansprüche 1 bis 3, dadurch gekennzeichnet, daß man ein Gemisch formt, das einerseits Titanoxid und andererseits das Sulfat eines Erdalkalimetalls oder das Gemisch einer das Sulfatanion liefernden und einer das Erdalkalikation liefernden Verbindung enthält, wobei man in folgenden Stufen arbeitet:

a) Man knetet ein Gemisch enthaltend

— 1 bis 40 Gew.-% Wasser

— 0 bis 15 Gew.-% eines formgebenden Zusatzes,

— 45 bis 99 Gew.-% eines Pulvers mit einem Glühverlust zwischen 1 und 50 %, bestehend aus einem schlecht kristallisierten und/oder amorphen Titanoxid und dem Erdalkalisulfat oder einem Gemisch der Sulfat liefernden Verbindung, die aus der Gruppe von Schwefelsäure und den in wässriger Lösung löslichen Sulfaten gewählt ist, und einer das Erdalkalikation liefernden Substanz enthält, die aus der Gruppe der in wässriger Lösung löslichen Erdalkalisalze gewählt ist, wobei das Gewichtsverhältnis von $SO_4$ zu $TiO_2$ in dem Pulver 0,01 bis 0,15 und vorzugsweise 0,05 bis bis 0,1 beträgt und das Gewichtsverhältnis von Erdalkalimetall zum Titanoxid 0,004 bis 0,20 und vorzugsweise 0,02 bis 0,15 beträgt,

b) Man führt die Formgebung des Gemisches durch ;

c) Man trocknet gegebenenfalls und calciniert die erhaltenen Produkte bei einer Temperatur zwischen 300 und 900 °C, vorzugsweise zwischen 350 und 800 °C.

6. Verfahren zur Herstellung des Katalysators nach irgendeinem der Ansprüche 1 bis 3, gekennzeichnet durch folgende Verfahrensschritte:

a) Man knetet ein Gemisch aus

— 1 bis 40 Gew.-% Wasser

— 0 bis 15 Gew.-% eines formgebenden Zusatzes

— 45 bis 99 Gew.-% eines Pulvers bestehend aus einer das Erdalkalikation liefernden Verbindung und einem aus dem Schwefelsäureaufschluß von Ilmenit stammenden und Sulfatanion enthaltenden Titanoxid, wobei das Gewichtsverhältnis von $SO_4$ zu $TiO_2$ in dem Pulver 0,01 bis 0,15 und vorzugsweise 0,05 bis 0,10, das Gewichtsverhältnis von Erdalkali zu Titanoxid in dem Pulver 0,004 bis 0,20 und vorzugsweise 0,02 bis 0,15 und der Glühverlust dieses Pulvers 1 bis 50 % beträgt,

b) Man führt die Formgebung des Gemisches durch,

c) Man trocknet gegebenenfalls und calciniert dann die erhaltenen Produkte bei einer Temperatur zwischen 300 und 900 °C, vorzugsweise zwischen 350 und 800 °C.

7. Verfahren zur Herstellung des Katalysators nach irgendeinem der Ansprüche 1 bis 3, gekennzeichnet durch folgende Verfahrensschritte:

A) Man knetet folgendes Gemisch:

— 1 bis 40 Gew.-% Wasser,

— 0 bis 15 Gew.-% eines formgebenden Zusatzes,

— 45 bis 90 Gew.-% eines aus dem Schwefelsäureaufschluß von Ileminit stammenden und Sulfatanion enthaltenden Pulvers von Titandioxid, wobei das Gewischtsverhältnis von $SO_4$ zu $TiO_2$ in dem Pulver 0,01 bis 0,15 und vorzugsweise 0,05 bis 0,10 beträgt und der Glühverlust des Pulvers vorzugsweise zwischen 1 und 50 % liegt.

B) Man führt die Formgebung des Gemisches durch und trocknet und calciniert dann gegebenenfalls bei einer Temperatur zwischen 300 und 900 °C, vorzugsweise zwischen 350 und 800 °C.

C) Man tränkt das geformte Produkt mit einer in wässriger Lösung löslichen, das Erdalkalikation liefernden Verbindung.

D) Man trocknet gegebenenfalls und calciniert dann die erhaltenen Produkte bei einer Temperatur zwischen 300 und 900 °C, vorzugsweise zwischen 350 und 800 °C.

8. Verfahren zur Herstellung des Katalysators nach irgendeinem der Ansprüche 1 bis 3, dadurch gekennzeichnet, daß man einen Formkörper auf der Grundlage von Titandioxid, der das Erdalkalikation enthält, sulfatiert, wobei diese Sulfatierung bei einer Temperatur zwischen 250 und 550 °C mit einem Gas durchgeführt wird, das vorzugsweise ein Gemisch von Schwefeldioxid und Luft enthält und die Gewichtsverhältnisse von $SO_4/TiO_2$ 0,01 bis 0,15 und von Erdalkali/$TiO_2$ 0,004 bis 0,20 betragen, worauf

die Produkte gegebenenfalls getrocknet und dann bei einer Temperatur zwischen 300 und 900 °C und vorzugsweise zwischen 350 und 800 °C calciniert werden.

9. Verfahren zur Behandlung von Schwefelverbindungen enthaltenen industriellen Abgasen, insbesondere nach dem Claus-Verfahren zur Wiedergewinnung von Schwefel aus Gasen, die insbesondere Schwefelwasserstoff, Schwefeldioxid und gegebenenfalls organische Schwefelverbindungen enthalten, dadurch gekennzeichnet, daß man den Katalysator nach irgendeinem der Ansprüche 1, 2 oder 3 einsetzt.